# EUROPEAN PATENT SPECIFICATION

(11) **EP 3 611 068 B1**
(45) Date of publication and mention of the grant of the patent: **21.12.2022**
(21) Application number: 18189217.5
(22) Date of filing: 16.08.2018
(51) Int. Cl.: B60W 30/12, B62D 15/02, G01C 21/26, B60W 40/06, B60W 30/14

(54) **DRIVING ASSISTANCE METHOD AND DEVICE, AND VEHICLE**
FAHRHILFEVERFAHREN UND -VORRICHTUNG UND FAHRZEUG
DISPOSITIF ET PROCÉDÉ D'AIDE À LA CONDUITE ET VÉHICULE

(43) Date of publication of application: 19.02.2020
(73) Proprietor: Continental Autonomous Mobility Germany GmbH, 85057 Ingolstadt (DE)
(72) Inventor: Asato, Tao, Tokyo, 144-0051 (JP); Tsubaki, Koji, Yokohama Tsuzuki, 224-0057 (JP); Igarashi, Mamoru, Machida, Tokyo, 194-0014 (JP)
(74) Representative: Continental Corporation

(56) References cited:
- EP-A1- 2 703 254
- EP-A1- 3 173 306
- EP-A2- 2 418 134
- US-A1- 2005 125 125
- US-A1- 2017 083 794
- US-A1- 2017 313 304
- US-A1- 2018 143 631

## Description

The invention relates to a driving assistance method for a vehicle, a driving assistance device for a vehicle, and a vehicle.

Modern lane keeping assistance systems are adapted to detect changes of the course of the road to generate steering control signals causing the vehicle to automatically follow the course of the road. For example, lateral deviations to road markers can be tracked, based on sensor information such as camera sensor data. An exemplary electric power steering device suppressing steering wheel return input from a road surface is known from JP 2011-084157 A. A further device for controlling the damping force of a vehicle shock absorber is disclosed in JP 2011-152838 A. From JP-2013-171530, a jolt predicting device is known. EP 3173306 B1 relates to a method and a device for determining a type of the road on which a vehicle is driving. From US 2017/0313304 A1, a travel control device for a vehicle is known. EP 2418134 A2 relates to a vibration applying structure detecting device. US 2005/0125125 A1 refers to a lane keep control apparatus.

Known lane keeping assistance systems typically take current road conditions into account. This allows to correct slow changes of the course of the road and can also provide efficient means to react to single bumps, road holes or other disturbances. However, a heavily uneven road can still lead to considerable lateral fluctuations which are difficult to avoid. The reason is that uneven roads can lead to high load variations. Further, the contact between the tires and the road is repeatedly or continuously changing which renders certain types of control methods inefficient. For example, a control method based on the steering torque will typically lead to relatively high lateral deviations. Accordingly, the vehicle no longer follows the course of the road. The driver may feel uneasy if - in addition to vertical deviations from a straight path due to the uneven road - there are also lateral deviations.

Another unpleasant effect of uneven surface regions is that the undulation frequency, that is the frequency given by the inverse of the time required to drive from one peak or top to the adjacent peak of the undulations of the road, may come close to certain resonance frequencies of the vehicle. In this case, the vertical displacements of the vehicle may become very large which can cause physical discomfort of the driver or of further passengers of the vehicle.

US 2017/083794 A1 reveals the features of the preamble of claims 1 and 12 and discloses a method comprising the steps obtaining sensor data output by a virtual sensor modeling the behavior of an image sensor while the virtual sensor is sensing a virtual anomaly defined within a virtual road surface, producing at least one perceived dimension of the virtual anomaly and quantifying performance of the one or more algorithms by comparing the at least one perceived dimension to at least one actual dimension of the virtual anomaly as defined in the virtual road surface.

In view of the above, it is therefore an object of the present invention to provide an approved driving assistance method and device which helps reducing unpleasant and uncomfortable effects when a vehicle is driving across uneven surface regions of a road.

In accordance with the invention, a driving assistance method as recited in claim 1 is provided. Further, a driving assistance device as recited in claim 12 is provided. Further, a vehicle having the features of claim 13 is provided. Various preferred features of the invention are recited in the dependent claims.

According to one aspect, therefore, the invention provides a driving assistance method for a vehicle. Road information is obtained regarding a road the vehicle is driving on. Uneven surface regions of the road are automatically detected using the obtained road information. At least one driving function of the vehicle is adapted depending on the detection of an uneven surface region of the road.

According to a second aspect, therefore, the invention provides a driving assistance device for a vehicle which comprises a road information obtaining device being configured to obtain road information regarding a road the vehicle is driving on. The driving assistance device further comprises a detection device configured to detect uneven surface regions of the road using the obtained road information. The driving assistance device further comprises an adapting device being configured to adapt at least one driving function of the vehicle based on the detection of an uneven surface region of the road.

According to a third aspect, the invention provides a vehicle comprising a driving assistance system.

An underlying idea of the invention is that the condition of the road is observed, and uneven surface regions of the road are detected or predicted using obtained road information already in advance. Therefore, it is possible to adjust and control certain driving functions of the vehicle in order to take countermeasures for reducing unwanted effects. By taking suitable measures, i.e., by controlling suitable driving functions, the effect of uneven surface regions on the course of the vehicle can be significantly reduced. For example, by choosing suitable lane keeping assistance methods, lateral variations can be reduced or avoided. For example, steering torque control may be deactivated and instead, an angle control of the vehicle may be activated during the time the vehicle is driving on the uneven road.

Moreover, by controlling vehicle parameters in a suitable way, resonance effects can be avoided. For example, the velocity of the vehicle may be adjusted such that the undulation frequency sufficiently differs from the resonance frequencies of the vehicle.

In summary, the smoothness of the steering of the vehicle can be significantly improved which also increases the satisfaction of the driver and the passengers of the vehicle.

According to a possible embodiment, the road information may be obtained based on data generated by the vehicle itself. The road information is obtained using sensor data of the vehicle. Generally, the vehicle may comprise one or multiple sensors, including cameras, particularly 3D or stereo cameras, radar sensors, lidar sensors or infrared sensors. The sensors may operate at different wave-lengths. The road information data comprises the sensor data obtained from the sensors, including camera sensor data, radar sensor data, lidar sensor data and infrared-sensor data.

According to a further embodiment, the sensor data is not generated by devices of the vehicle itself but rather by external devices. These external devices could be sensors of other vehicles which communicate via car-to-car-communication, that is a direct wireless connection or a connection via central servers. The external sensor data is obtained over an interface of the vehicle and further processed by internal devices of the vehicle.

According to further embodiments, the road information may be partly generated by devices of the vehicle and may be partly obtained from external devices such as these of other vehicles.

According to further embodiments it is also possible that at least some of the method steps of the driving assistance method are performed on external devices, for example an external server. According to an embodiment, all computation steps are performed in real time on an external server and only the driving control signal for adapting the at least one driving function of the vehicle is transmitted to the vehicle. An advantage is that less local resources of the vehicle are required.

Detecting the uneven surface regions of the road based on the road information as described can be achieved by respective data processing methods. For example, camera sensor data can be analyzed in order to determine undulations or an unevenness of the road. The analysis may comprise edge detection methods or image evaluation methods including neural networks. As further examples, the heights of the undulations and distances between adjacent peaks of the undulations can be inferred from distance measurements based on radar data and/or lidar data.

According to a further possible embodiment, the road information is obtained using traffic data and/or navigation data and/or GPS data and/or map data and/or vehicle surrounding data. Such information may be provided and stored on local storage devices of the vehicle. The information may also be received via wireless connections.

Detecting the uneven surface regions of the road based on such data may be performed using image recognition. For example, the data may be based on high-definition satellite images. Further, the exact location of the vehicle is inferred from GPS data. By analyzing the high-definition satellite images, uneven surface regions can be detected using standard image recognition methods. If the quality of the map data is high, single peaks of the undulations can be located and distances between adjacent peaks of the undulations can be inferred with sufficient accuracy.

According to the invention, a periodic undulation of the uneven surface region of the road is detected, the periodic undulation pointing in a direction perpendicular to the road. In other words, a periodic undulation is considered to refer to a periodic vertical modulation of the road surface, i.e. a wavy surface of the road. The periodic undulation is determined using the road information. The driving function of the vehicle is adapted depending on the determined periodic undulation.

According to a further embodiment of the driving assistance method, the periodic undulation of the uneven surface region of the road is determined using a course of road markings of the road. If the road is uneven, the road markings do no longer appear straight but rather distorted. Sensors of the vehicle can detect and measure the course of the road markings of the road. In the presence of periodic undulations, the road markings will appear wavy and a periodic length of the wave-type shape of the road markings will correspond to the periodic length of the undulations, that is the distance between two adjacent peaks of the undulations. Accordingly, the distance between two adjacent peaks of the undulations can be inferred from the course of the road markings.

According to a further preferred embodiment, an undulation frequency of the periodic undulation with regard to the vehicle crossing the uneven surface region of the road is computed based on the determined periodic undulation and further based on a driving parameter of the vehicle.

According to a further preferred embodiment of the driving assistance method, the undulation frequency is determined further based on a step of determining distances between adjacent peaks of the undulations of the uneven surface region of the road using the road information. The undulation frequency generally refers to the inverse of the time which the vehicle requires to get from one peak of the undulations of the road to the adjacent peak.

It is to be understood that the undulation frequency is not necessarily constant but may also differ. In general, the undulation frequency differs if the velocity or driving direction of the vehicle changes. The undulation frequency also differs if the distance between adjacent peaks varies.

According to further preferred embodiment of the driving assistance method, the driving parameter of the vehicle comprises a velocity of the vehicle and/or an acceleration of the vehicle and/or an orientation of the vehicle with respect to the uneven surface region of the road. If the vehicle is driving faster, the time required to get from one peak to the adjacent peak reduces and the undulation frequency increases. Likewise, if the vehicle accelerates, the undulation frequency will increase. The road undulations often have a wavy shape or form ripples which are generated by the wheels of the vehicles. Accordingly, the undulations typically follow the course of the road. That is to say, lines of constant height or wave fronts are typically perpendicular to the course of the road. Therefore, the undulation frequency also depends on the exact orientation of the driving direction of the vehicle, that is the angle between the vehicle and the undulations.

According to a further embodiment of the driving assistance method, adapting the driving function of the vehicle comprises adapting a velocity of the vehicle based on a comparison of the computed undulation frequency and a resonance frequency of the vehicle. For example, if the computed undulation frequency comes very close to a resonance frequency of the vehicle, the vehicle may be accelerated or decelerated. Because the undulation frequency depends on the velocity of the vehicle, the undulation frequency will change and will differ from the resonance frequency of the vehicle. Accordingly, resonance effects can be avoided or at least strongly reduced. Whether the vehicle is accelerated or decelerated can depend on the specific road conditions. Also speed limits may be taken into account.

According to a preferred embodiment of the driving assistance method, adapting the driving function of the vehicle comprises switching from a first lane keeping assistance mode of the vehicle to a second lane keeping assistance mode of the vehicle after an uneven surface region of the road has been detected. By switching the lane keeping assistance mode, the variation of tire/road contact load can be taken into account. Generally, different lane keeping assistance modes of the vehicle have different sensitivities to the rapid movements of the vehicle due to the uneven road. Accordingly, it is preferred to select a less sensitive lane keeping assistance mode after the uneven surface region of the road has been detected in order to avoid strong lateral deviations.

According to a further preferred embodiment of the driving assistance method, the first lane keeping assistance mode of the vehicle comprises a steering torque control mode of the vehicle. Additionally or alternatively, the second lane keeping assistance mode of the vehicle may comprise an angle control mode of the vehicle. An angle control mode will typically produce less lateral deviations. Accordingly, the vehicle is driving smoother which is more convenient for the driver and the other passengers.

According to a further preferred embodiment of the driving assistance method, adapting the driving function of the vehicle comprises adapting the length of steering control cycles after an uneven surface region of the road has been detected. For example, the length of steering control cycles can be reduced such that the control method responds faster to changes. The length of steering control cycles may also be increased in order to avoid too many unnecessary control measures.

According to a further preferred embodiment of the driving assistance method, a time span during which the vehicle is crossing the uneven surface region of the road is predicted. The driving function of the vehicle is adapted at least for the predicted time span. For example, the lane keeping assistance mode may be changed for at least the predicted time span.

According to further embodiments, the at least one driving function of the vehicle is changed already in advance that is already before the vehicle reaches the uneven surface region of the road.

According to further embodiments, some of the driving functions of the vehicle may be changed in advance, for example the velocity of the vehicle may be changed. Other driving functions of the vehicle may be changed when the vehicle reaches the uneven surface region of the road, for example the lane keeping assistance mode may be changed.

For a more complete understanding of the invention and the advantages thereof, exemplary embodiments of the invention are explained in more detail in the following description with reference to the accompanying drawing figures, in which like reference characters designate like parts and in which:
- Fig. 1: shows a schematic block diagram of a driving assistance device according to an embodiment of the invention;
- Fig. 2: shows a schematic side view of a vehicle driving on a road having uneven surface regions;
- Fig. 3: shows a schematic top view of a vehicle driving on a road having wavy road markings;
- Fig. 4: shows a flowchart of a driving assistance method for a vehicle according to an embodiment of the invention;
- Fig. 5: shows a flowchart of a driving assistance method for a vehicle according to a further embodiment of the invention; and
- Fig. 6: shows an exemplary implementation of a certain method step of the driving assistance method according to the flowchart depicted in figure 5.

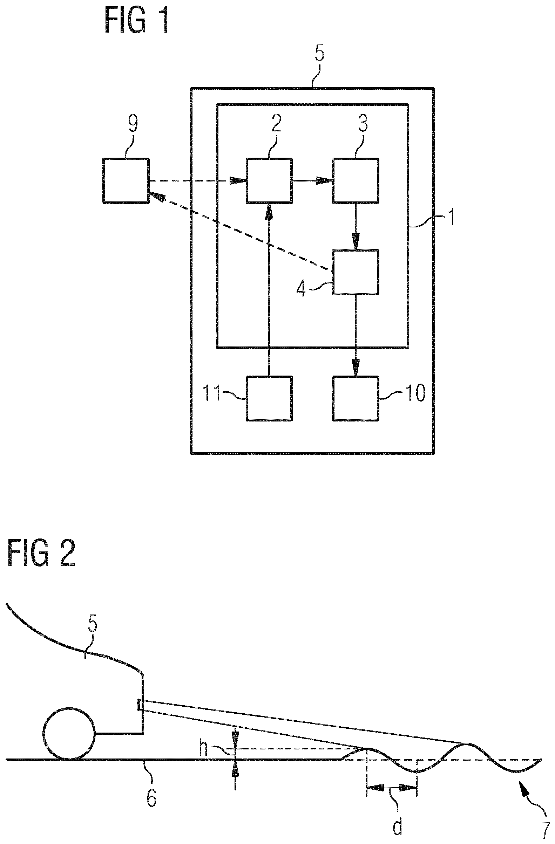

Figure 1 shows a schematic block diagram of a driving assistance device 1 for a vehicle 5. The vehicle 5 may be a car, a bus, a motorcycle or a truck which is driving on a road. The driving assistance system 1 comprises a road information obtaining device 2 which is configured to obtain road information regarding the road the vehicle 5 is currently driving on. The road information obtaining device 2 is connected to a sensor system 11 of the vehicle 5. The sensor system 11 comprises at least one vehicle sensor which is adapted to generate sensor data regarding the surrounding of the vehicle 5. Particularly, the sensor system 11 may comprise at least one radar sensor and/or at least one lidar sensor and/or at least one camera and/or at least one infrared sensor. The sensor system 11 transmits the generated sensor data to the road information obtaining device 2.

Optionally, the road information obtaining device 2 may also be connected via a wireless connection to an external device 9. For example, the road information obtaining device 2 may establish a car-to-car communication to a further vehicle and may obtain road information generated by the further vehicle. For example, the further vehicle may have generated sensor data, such as camera sensor data, radar sensor data, lidar sensor data and/or infrared sensor data and may transmit the generated sensor data to the road information obtaining device 2.

The road information obtaining device 2 may also be connected to an external server for receiving constantly updated traffic data or navigation data. Further, the road information obtaining device 2 may be adapted to receive GPS data and may be configured to determine a location of the vehicle 5. The road information obtaining device 2 may also obtain map data comprising high-definition satellite images of the road. The map data may be stored in a local storage device.

The driving assistance device 1 further comprises a detection device 3 which is configured to analyze the obtained road information and to detect uneven surface regions of the road based on the analysis of the obtained road information. For example, the detection device 3 can apply edge detection methods to images of the map data or to camera images of the camera sensor data generated by the vehicle 5 or generated by a further vehicle in order to detect undulations of the road.

The detection device 3 is further adapted to analyze the undulations of the road and to determine specific characterizations of the undulations.

The driving assistance device 1 further comprises an adapting device 4 which adapts at least one driving function of the vehicle 5 based on the detection of an uneven surface region. The adapting device 4 generates a control signal and transmits the control signal to a vehicle control device 10 of the vehicle 5 based on the detected uneven surface region. Based on the control signal, the vehicle control device 10 controls the driving functions of the vehicle 5. For example, the adapting device 4 may generate a control signal for accelerating or decelerating the vehicle 5. The adapting device 4 may also generate a control signal for changing the lane keeping assistance mode of the vehicle 5. If no uneven road is detected, a lane keeping assistance system of the vehicle 5 may be driven in a first lane keeping assistance mode. The first lane keeping assistance mode can for example be a steering torque control mode. In the steering torque control mode, the steering torque of the vehicle 5 is measured and controlled. If an uneven road is detected, the adapting device 4 changes the lane keeping assistance mode to a second lane keeping assistance mode, which can be an angle control mode of the vehicle 5. In the angle control mode, the steering angle of the vehicle 5 is measured and controlled.

The adapting device 4 may further be configured to send information to the external device 9. For example, further vehicles may control driving functions based on information generated by the driving assistance device 1.

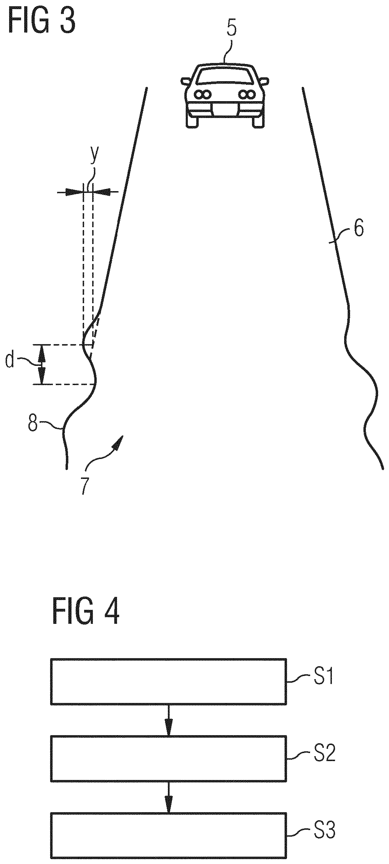

The adapting device 4 is further configured to adapt the at least one driving function based on the determined characterizations of the undulations. Examples will be described with reference to scenarios shown in figures 2 and 3.

In figure 2, the vehicle 5 is driving on the road 6 and is approaching an uneven surface region 7 of the road 6. The uneven surface region 7 comprises periodic undulations having peaks of a height h measured in a vertical direction perpendicular to the road 6 and an undulation distance d given by the distance d between a peak of the surface region 7 of the road 6 and a subsequent dip of the surface region 7 of the road 6. The detection device 3 is adapted to measure both the height h and the undulation distance d using the obtained road information. The height h is a measure for the intensity or amplitude of possible disturbances of the vehicle 5 driving across the uneven surface region 7 of the road 6. Moreover, the detection device 3 computes the undulation frequency which depends on the time the vehicle 5 needs to cover the distance between two subsequent peaks of the uneven surface region 7 of the road 6. The detection device 3 computes the undulation frequency by taking the undulation distance d and the velocity, acceleration and orientation of the vehicle 5 into account.

The adapting device 4 is configured to compare the undulation frequency computed by the detection device 3 with resonance frequencies of the vehicle 5 stored in a memory of the adapting device 4. If the difference between the undulation frequency and a resonance frequency of the vehicle 5 is less than a predetermined value, the adapting device 4 will decelerate or accelerate the vehicle 5. The detection device 3 can continuously update the undulation frequency which changes as a result of the changing acceleration and velocity of the vehicle 5. If the difference between the undulation frequency and the resonance frequencies of the vehicle 5 is again greater than or equal to a predetermined value, the adapting device 4 may stop decelerating or accelerating the vehicle 5.

Figure 3 shows a further schematic scenario of the vehicle 5 driving on the road 6 and approaching an uneven surface region 7 of the road 6. The road information obtaining device 2 of the driving assistance device 1 of the vehicle 5 is adapted to obtain sensor data of the road markings 8 of the road 6. Similar to figure 2, the surface of the road 6 changes periodically in a vertical direction in the uneven surface region 7 of the road 6. The consequence is that the road markings 8 appear wavy, having an amplitude y and a distance d corresponding to the undulation distance d defined above. By measuring the form and characteristics of the road markings 8, detection device 3 computes the undulation frequency, again taking velocity, acceleration and orientation of the vehicle 5 into account.

Figure 4 shows a flowchart of a driving assistance method for a vehicle 5. In a method step S1, road information is obtained, comprising at least one of sensor data of the vehicle 5, sensor data generated by different vehicles, traffic data, navigation data, GPS data, map data and vehicle surrounding data.

In a second method step S2, uneven surface regions 7 of the road 6 are detected by taking the obtained road information into account. The uneven surface region 7 may be detected based on image analysis methods applied to camera sensor data. Undulations may also be identified based on distance measurements taking radar sensor or lidar sensor into account. Moreover, characteristics of the undulations, such as distances between subsequent peaks can be determined based on the obtained road information. Based on the distances between subsequent peaks, the undulation frequency of the vehicle 5 can be computed which depends on the velocity, acceleration and orientation of the vehicle 5.

In a third method step S3, at least one driving function of the vehicle 5 is adapted, depending on the detection of an uneven surface region 7 of the road 6. For example, the velocity of the vehicle 5 may be changed if an uneven surface region 7 is detected. The velocity may be adjusted based on the determined undulation frequency of the vehicle 5. In addition or alternatively, the lane keeping assistance mode can be changed or the length of steering control cycles can be adapted.

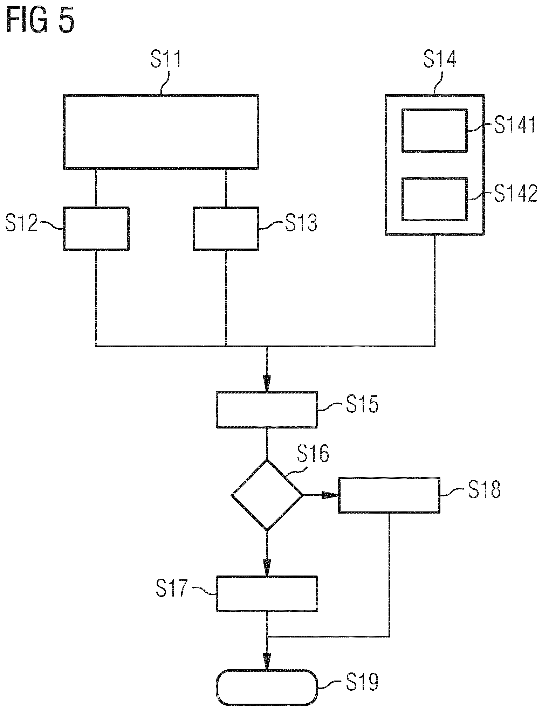

Figure 5 shows another flowchart of a driving assistance method for a vehicle 5.

In a method step S11, environment sensor data regarding the road 6 is generated using camera sensors, radar sensors, lidar sensors or infrared sensors of the vehicle 5. Further, connectivity data can be obtained using car-to-car communication with further vehicles.

In a method step S12, the presence of forward road undulations is detected based on this information. In a step S13, additional information is obtained, comprising a curvature of the road 6, information regarding current traffic rules, traffic information, as well as environment information of the vehicle 5.

In a further method step S14, vehicle information regarding the vehicle 5 is generated which comprises information of chassis sensors, S141, such as the velocity, acceleration and orientation of the vehicle. The orientation of the vehicle 5 may comprise information regarding yaw, pitch and roll of the vehicle 5 and components Ax, Ay, Az of the gravity vector of the vehicle 5. The vehicle information regarding the vehicle 5 is further comprising information regarding the vehicle behavior and the localized position of the vehicle 5, S142.

Based on the detected forward road undulations, the obtained road information and the obtained vehicle information, a road undulation frequency is calculated, S15. In order to determine the undulation frequency, a difference between subsequent peaks of the undulation is computed from the obtained data.

In a further method step S16, the road undulation frequency is compared to possible resonance frequencies of the vehicle 5 which originate from unsprung resonances. The difference between the road undulation frequency and any of the possible resonance frequencies is larger than a predetermined value, at least one driving parameter of the vehicle 5 is adapted, S18. Otherwise, the driving parameter of the vehicle 5 are kept and left unchanged, S17. For example, a lateral control strategy may be switched from a steering torque control method to an angle control method. Moreover, the vehicle velocity may be changed, or steering control cycles may be adapted. More generally, a single driving parameter can be changed or a combination of two or more driving parameters can be adapted. After adapting the driving parameters of the vehicle 5, the method terminates, S19.

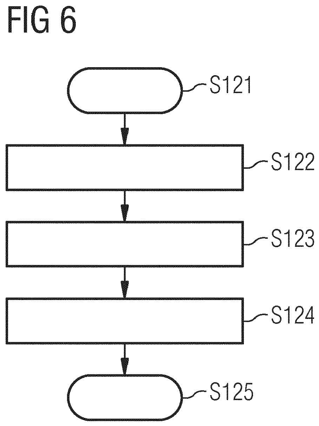

Figure 6 shows a flowchart describing in more detail method step S12 of detecting the presence of forward road undulations. After the method starts, S121, the forward road 6, i.e., the portion of the road 6 ahead of the vehicle 5 in the driving direction of the vehicle 5 is observed and scanned, S122.

Possible undulation regions are detected, S123. The distances from one top or peak to another are measured, S124 and the method ends, S125.

### REFERENCE SIGNS

- 1: driving assistance device
- 2: road information obtaining device
- 3: detection device
- 4: adapting device
- 5: vehicle
- 6: road
- 7: uneven surface region
- 8: road marking
- 9: external device
- 10: vehicle control device
- 11: sensor system

## Claims

1. Driving assistance method for a vehicle (5), comprising the following steps:
obtaining (S1) road information regarding a road (6) the vehicle (5) is driving on;
automatically detecting (S2) uneven surface regions (7) of the road (6) using the obtained road information; and adapting (S3) at least one driving function of the vehicle (5) depending on the detection of an uneven surface region (7) of the road (6);
**characterized in that** the road information is obtained using sensor data of the vehicle (5), the sensor data comprising at least one of camera sensor data, radar sensor data, lidar sensor data and infrared sensor data, wherein a periodic undulation of the uneven surface region (7) of the road (6) in a direction perpendicular to the road (6) is determined using the road information, and wherein the driving function of the vehicle (5) is adapted depending on the determined periodic undulation.

2. Driving assistance method according to claim 1, wherein the road information is obtained using at least one of traffic data, navigation data, GPS data, map data and vehicle surrounding data.

3. Driving assistance method according to claim 1, wherein the periodic undulation of the uneven surface region of the road (6) in a direction perpendicular to the road (6) is determined using a course of road markings (8) of the road (6).

4. Driving assistance method according to claim 3, wherein an undulation frequency of the periodic undulation with regard to the vehicle (5) crossing the uneven surface region (7) of the road (6) is computed based on the determined periodic undulation and further based on a driving parameter of the vehicle (5).

5. Driving assistance method according to claim 4, wherein the undulation frequency is determined further based on a step of determining distances between adjacent peaks of the undulations of the uneven surface region (7) of the road (6) using the road information.

6. Driving assistance method according to claim 4 or 5, wherein the driving parameter of the vehicle (5) comprises at least one of a velocity of the vehicle (5), an acceleration of the vehicle (5) and an orientation of the vehicle (5) with respect to the uneven surface region (7) of the road (6).

7. Driving assistance method according to any of claims 4 to 6, wherein adapting the driving function of the vehicle (5) comprises adapting a velocity of the vehicle (5) based on a comparison of the computed undulation frequency and a resonance frequency of the vehicle (5).

8. Driving assistance method according to any of the preceding claims, wherein adapting the driving function of the vehicle (5) comprises switching from a first lane keeping assistance mode of the vehicle (5) to a second lane keeping assistance mode of the vehicle (5) after an uneven surface region (7) of the road (6) has been detected.

9. Driving assistance method according to claim 8, wherein the first lane keeping assistance mode of the vehicle (5) comprises a steering torque control mode of the vehicle (5) and/or wherein the second lane keeping assistance mode of the vehicle (5) comprises an angle control mode of the vehicle (5).

10. Driving assistance method according to any of the preceding claims, wherein adapting the driving function of the vehicle (5) comprises adapting the length of steering control cycles after an uneven surface region (7) of the road (6) has been detected.

11. Driving assistance method according to any of the preceding claims, further comprising predicting a time span when the vehicle is crossing the uneven surface region (7) of the road (6), and wherein the driving function of the vehicle (5) is adapted at least for the predicted time span.

12. Driving assistance device (1) for a vehicle (5), comprising
a road information obtaining device (2) configured to obtain road information regarding a road (6) the vehicle (5) is driving on;
an detection device (3) configured to detect uneven surface regions (7) of the road (6) using the obtained road information;
and
an adapting device (4) configured to adapt at least one driving function of the vehicle (5) based on the detection of an uneven surface region (7) of the road (6); **characterized in that** the road information obtaining device (2) is adapted to obtain the road information using sensor data of the vehicle (5), the sensor data comprising at least one of camera sensor data, radar sensor data, lidar sensor data and infrared sensor data, whereby a periodic undulation of the uneven surface region (7) of the road (6) in a direction perpendicular to the road (6) is determined using the road information, and
whereby the driving function of the vehicle (5) is adapted depending on the determined periodic undulation.

13. Vehicle (5) comprising a driving assistance system according to claim 11.

## Patentansprüche

1. Fahrassistenzverfahren für ein Fahrzeug (5), das die folgenden Schritte aufweist:
Beschaffen (S1) von Straßeninformation in Bezug auf eine Straße (6), auf der das Fahrzeug (5) fährt;
automatisches Detektieren (S2) unebener Fahrbahnbereiche (7) der Straße (6) unter Verwendung der beschafften Straßeninformation; und
Anpassen (S3) mindestens einer Fahrfunktion des Fahrzeugs (5) in Abhängigkeit von der Detektion eines unebenen Fahrbahnbereichs (7) der Straße (6);
**dadurch gekennzeichnet, dass** die Straßeninformation unter Verwendung von Sensordaten des Fahrzeugs (5) beschafft wird, wobei die Sensordaten mindestens eines von Kamerasensordaten, Radarsensordaten, Lidarsensordaten und Infrarotsensordaten aufweisen, wobei eine periodische Welligkeit des unebenen Fahrbahnbereichs (7) der Straße (6) in einer Richtung im rechten Winkel zu der Straße (6) unter Verwendung der Straßeninformation bestimmt wird, und wobei die Fahrfunktion des Fahrzeugs (5) in Abhängigkeit von der bestimmten periodischen Welligkeit angepasst wird.

2. Fahrassistenzverfahren nach Anspruch 1, wobei die Straßeninformation unter Verwendung mindestens eines von Verkehrsdaten, Navigationsdaten, GPS-Daten, Kartendaten und Fahrzeugumgebungsdaten beschafft wird.

3. Fahrassistenzverfahren nach Anspruch 1, wobei die periodische Welligkeit des unebenen Fahrbahnbereichs der Straße (6) in einer Richtung im rechten Winkel zu der Straße (6) unter Verwendung eines Verlaufs von Straßenmarkierungen (8) der Straße (6) bestimmt wird.

4. Fahrassistenzverfahren nach Anspruch 3, wobei eine Welligkeitsfrequenz der periodischen Welligkeit in Bezug auf ein Überqueren des unebenen Fahrbahnbereichs (7) der Straße (6) durch das Fahrzeug (5) basierend auf der bestimmten periodischen Welligkeit und ferner basierend auf einem Fahrparameter des Fahrzeugs (5) berechnet wird.

5. Fahrassistenzverfahren nach Anspruch 4, wobei die Welligkeitsfrequenz ferner basierend auf einem Schritt zum Bestimmen von Abständen zwischen benachbarten Scheitelpunkten der Welligkeiten des unebenen Fahrbahnbereichs (7) der Straße (6) unter Verwendung der Straßeninformation bestimmt wird.

6. Fahrassistenzverfahren nach Anspruch 4 oder 5, wobei der Fahrparameter des Fahrzeugs (5) mindestens eines einer Geschwindigkeit des Fahrzeugs (5), einer Beschleunigung des Fahrzeugs (5) und einer Ausrichtung des Fahrzeugs (5) in Bezug auf den unebenen Fahrbahnbereich (7) der Straße (6) aufweist.

7. Fahrassistenzverfahren nach einem der Ansprüche 4 bis 6, wobei das Anpassen der Fahrfunktion des Fahrzeugs (5) Anpassen einer Geschwindigkeit des Fahrzeugs (5) basierend auf einem Vergleich der berechneten Welligkeitsfrequenz und einer Resonanzfrequenz des Fahrzeugs (5) aufweist.

8. Fahrassistenzverfahren nach einem der vorhergehenden Ansprüche, wobei das Anpassen der Fahrfunktion des Fahrzeugs (5) Umschalten von einem ersten Spurhalteassistenzmodus des Fahrzeugs (5) zu einem zweiten Spurhalteassistenzmodus des Fahrzeugs (5), nachdem ein unebener Fahrbahnbereich (7) der Straße (6) detektiert wurde, aufweist.

9. Fahrassistenzverfahren nach Anspruch 8, wobei der erste Spurhalteassistenzmodus des Fahrzeugs (5) einen Lenkmomentsteuermodus des Fahrzeugs (5) aufweist und/oder wobei der zweite Spurhalteassistenzmodus des Fahrzeugs (5) einen Winkelsteuermodus des Fahrzeugs (5) aufweist.

10. Fahrassistenzverfahren nach einem der vorhergehenden Ansprüche, wobei das Anpassen der Fahrfunktion des Fahrzeugs (5) Anpassen der Länge von Lenksteuerzyklen, nachdem ein unebener Fahrbahnbereich (7) der Straße (6) detektiert wurde, aufweist.

11. Fahrassistenzverfahren nach einem der vorhergehenden Ansprüche, ferner aufweisend Vorhersagen einer Zeitspanne, in der das Fahrzeug den unebenen Fahrbahnbereich (7) der Straße (6) überqueren wird, und wobei die Fahrfunktion des Fahrzeugs (5) mindestens für die vorhergesagte Zeitspanne angepasst wird.

12. Fahrassistenzvorrichtung (1) für ein Fahrzeug (5), die Folgendes aufweist
eine Straßeninformationsbeschaffungsvorrichtung (2), die dazu ausgebildet ist, eine Straßeninformation in Bezug auf eine Straße (6), auf der das Fahrzeug (5) fährt, zu beschaffen;
eine Detektionsvorrichtung (3), die dazu ausgebildet ist, unebene Fahrbahnbereiche (7) der Straße (6) unter Verwendung der beschafften Straßeninformation zu detektieren;
und
eine Anpassungsvorrichtung (4), die dazu ausgebildet ist, mindestens eine Fahrfunktion des Fahrzeugs (5) basierend auf der Detektion eines unebenen Fahrbahnbereichs (7) der Straße (6) anzupassen;
**dadurch gekennzeichnet, dass** die Straßeninformationsbeschaffungsvorrichtung (2) dazu ausgelegt ist, die Straßeninformation unter Verwendung von Sensordaten des Fahrzeugs (5) zu beschaffen, wobei die Sensordaten mindestens eines von Kamerasensordaten, Radarsensordaten, Lidarsensordaten und Infrarotsensordaten aufweisen, wobei eine periodische Welligkeit des unebenen Fahrbahnbereichs (7) der Straße (6) in einer Richtung im rechten Winkel zu der Straße (6) unter Verwendung der Straßeninformation bestimmt wird, und
wobei die Fahrfunktion des Fahrzeugs (5) in Abhängigkeit von der bestimmten periodischen Welligkeit angepasst wird.

13. Fahrzeug (5), das ein Fahrassistenzsystem nach Anspruch 11 aufweist.

## Revendications

1. Procédé d'aide à la conduite pour un véhicule (5), comprenant les étapes suivantes :
l'obtention (S1) d'informations de route concernant une route (6) sur laquelle le véhicule (5) est en train de rouler ;
la détection automatique (S2) de régions de surface inégale (7) de la route (6) en utilisant les informations de route obtenues ; et
l'adaptation (S3) d'au moins une fonction de conduite du véhicule (5) selon la détection d'une région de surface inégale (7) de la route (6) ;
**caractérisé en ce que** les informations de route sont obtenues en utilisant des données de capteur du véhicule (5), les données de capteur comprenant au moins un type de données parmi des données de capteur de caméra, des données de capteur radar, des données de capteur lidar et des données de capteur infrarouge, dans lequel une ondulation périodique de la région de surface inégale (7) de la route (6) dans une direction perpendiculaire à la route (6) est déterminée en utilisant les informations de route, et dans lequel la fonction de conduite du véhicule (5) est adaptée selon l'ondulation périodique déterminée.

2. Procédé d'aide à la conduite selon la revendication 1, dans lequel les informations de route sont obtenues en utilisant au moins un type de données parmi des données de circulation, des données de navigation, des données GPS, des données cartographiques et des données d'environnement de véhicule.

3. Procédé d'aide à la conduite selon la revendication 1, dans lequel l'ondulation périodique de la région de surface inégale de la route (6) dans une direction perpendiculaire à la route (6) est déterminée en utilisant une suite de marquages de route (8) de la route (6) .

4. Procédé d'aide à la conduite selon la revendication 3, dans lequel une fréquence d'ondulation de l'ondulation périodique en ce qui concerne le véhicule (5) traversant la région de surface inégale (7) de la route (6) est calculée sur la base de l'ondulation périodique déterminée et en outre sur la base d'un paramètre de conduite du véhicule (5).

5. Procédé d'aide à la conduite selon la revendication 4, dans lequel la fréquence d'ondulation est déterminée en outre sur la base d'une étape de la détermination de distances entre des sommets adjacents des ondulations de la région de surface inégale (7) de la route (6) en utilisant les informations de route.

6. Procédé d'aide à la conduite selon la revendication 4 ou 5, dans lequel le paramètre de conduite du véhicule (5) comprend au moins une parmi une vitesse du véhicule (5), une accélération du véhicule (5) et une orientation du véhicule (5) par rapport à la région de surface inégale (7) de la route (6).

7. Procédé d'aide à la conduite selon l'une quelconque des revendications 4 à 6, dans lequel l'adaptation de la fonction de conduite du véhicule (5) comprend l'adaptation d'une vitesse du véhicule (5) sur la base d'une comparaison de la fréquence d'ondulation calculée et d'une fréquence de résonance du véhicule (5).

8. Procédé d'aide à la conduite selon l'une quelconque des revendications précédentes, dans lequel l'adaptation de la fonction de conduite du véhicule (5) comprend le changement d'un premier mode d'aide au maintien dans la voie du véhicule (5) à un second mode d'aide au maintien dans la voie du véhicule (5) après qu'une région de surface inégale (7) de la route (6) a été détectée.

9. Procédé d'aide à la conduite selon la revendication 8, dans lequel le premier mode d'aide au maintien dans la voie du véhicule (5) comprend un mode de commande de couple de braquage du véhicule (5) et/ou dans lequel le second mode d'aide au maintien dans la voie du véhicule (5) comprend un mode de commande d'angle du véhicule (5).

10. Procédé d'aide à la conduite selon l'une quelconque des revendications précédentes, dans lequel l'adaptation de la fonction de conduite du véhicule (5) comprend l'adaptation de la longueur de cycles de commande de braquage après qu'une région de surface inégale (7) de la route (6) a été détectée.

11. Procédé d'aide à la conduite selon l'une quelconque des revendications précédentes, comprenant en outre la prédiction d'une durée pendant laquelle le véhicule traverse la région de surface inégale (7) de la route (6), et dans lequel la fonction de conduite du véhicule (5) est adaptée au moins pendant la durée prédite.

12. Dispositif d'aide à la conduite (1) pour un véhicule (5), comprenant un dispositif d'obtention d'informations de route (2) configuré pour obtenir des informations de route concernant une route (6) sur laquelle le véhicule (5) est en train de rouler ;
un dispositif de détection (3) configuré pour détecter des régions de surface inégale (7) de la route (6) en utilisant les informations de route obtenues ;
et
un dispositif d'adaptation (4) configuré pour adapter au moins une fonction de conduite du véhicule (5) sur la base de la détection d'une région de surface inégale (7) de la route (6) ;
**caractérisé en ce que** le dispositif d'obtention d'informations de route (2) est adapté pour obtenir les informations de route en utilisant des données de capteur du véhicule (5), les données de capteur comprenant au moins un type de données parmi des données de capteur de caméra, des données de capteur radar, des données de capteur lidar et des données de capteur infrarouge, moyennant quoi une ondulation périodique de la région de surface inégale (7) de la route (6) dans une direction perpendiculaire à la route (6) est déterminée en utilisant les informations de route, et
moyennant quoi la fonction de conduite du véhicule (5) est adaptée selon l'ondulation périodique déterminée.

13. Véhicule (5), comprenant un système d'aide à la conduite selon la revendication 11.
